# EUROPEAN PATENT SPECIFICATION

(11) **EP 3 120 606 B1**
(45) Date of publication and mention of the grant of the patent: **02.06.2021**
(21) Application number: 15747218.4
(22) Date of filing: 17.03.2015
(51) Int. Cl.: H04W 28/02, H04W 28/08

(54) **METHODS AND APPARATUSES FOR FLOW CONTROL IN A DUAL CONNECTIVITY SYSTEM**
VERFAHREN UND VORRICHTUNGEN ZUR DURCHFLUSSREGELUNG IN EINEM DUALEN KONNEKTIVITÄTSSYSTEM
PROCÉDÉS ET APPAREILS DE CONTRÔLE DU DÉBIT DANS UN SYSTÈME À DOUBLE CONNECTIVITÉ

(30) Priority: 21.03.2014 CN 201410109859
(43) Date of publication of application: 25.01.2017
(73) Proprietor: Alcatel Lucent, 91620 Nozay (FR)
(72) Inventor: WEN, Pingping, Shanghai 201206 (CN); WORRALL, Chandrika, Newbury Berkshire RG14 6SN (GB); DENG, Yun, Shanghai 201206 (CN)
(74) Representative: Novagraaf Technologies
(86) International application number: PCT/IB2015/000630
(87) International publication number: WO 2015/155598

(56) References cited:
- EP-A1- 2 685 757
- WO-A1-2015/012545
- US-A1- 2011 044 168
- US-A1- 2014 056 243
- ALONISTIOTI N ET AL: "Toward a generic always best connected capability in integrated wlan/umts cellular mobile networks (and beyond)", IEEE PERSONAL COMMUNICATIONS, IEEE COMMUNICATIONS SOCIETY, US, vol. 12, no. 3, 1 June 2005 (2005-06-01), pages 20-29, XP011134872, ISSN: 1070-9916, DOI: 10.1109/MWC.2005.1452851

## Description

### FIELD OF THE INVENTION

The present invention generally relate to the field of wireless communication, and more specifically, to a method and apparatus for flow control in a dual connectivity system.

### BACKGROUND OF THE INVENTION

With constant development of communication technologies, improved communication systems have been constantly developed on the basis of legacy communication network architectures.

A dual connectivity system is an improved communication system being proposed. In the dual connectivity system, a user terminal may have uplink and downlink communication simultaneously with two (or more) base stations. Among the two (or more) base stations communicating with the user terminal, there is a primary base station that may manage the communication of the dual connectivity system, while the remaining base stations are secondary base stations. Besides, in the dual connectivity system, it has been agreed that downlink may employ two kinds of user plane architectures, i.e., user plane architectures 1A and 3C. Although user plane architectures are not agreed in the uplink, due to the gains brought by user plane architecture 3C, application of this user plane architecture has been extensively discussed. In user plane architecture 3C, the primary and secondary base stations may serve for one radio bearer. Such radio bearer is referred to as a splitting bearer.

In uplink communication of the dual connectivity system, the user terminal may simultaneously transmit a part of data that is to be transmitted on the splitting bearer through a primary base station, while the remaining part is transmitted through a secondary base station. This involves an issue of flow control. Therefore, an effective flow control scheme is desired to determine data amounts that are transmitted through the primary base station and the secondary base station respectively, and it is also desired to dynamically adjust the flow control scheme based on variation of communication conditions.

EP 2 685 757 A1 discloses a method for congestion control in a transport network of a radio access network, wherein the radio access network comprises a control node and two or more radio access nodes, wherein the two or more radio access nodes are coupled to the control node through the transport network.

US 2014/056243 A1 discloses systems and methods for a WTRU to operate using multiple schedulers. The WTRU may exchange data with the network over more than one data path, such that each data path may use a radio interface connected to a different network node and each node may be associated with an independent scheduler.

ALONISTIOTI N ET AL: "Toward a generic always best connected capability in integrated wlan/umts cellular mobile networks (and beyond)", IEEE PERSONAL COMMUNICATIONS, IEEE COMMUNICATIONS SOCIETY, US, vol. 12, no. 3, 1 June 2005 (2005-06-01), pages 20-29 discloses an analysis of the implications of the "ABC" vision in a UMTS/WLAN network context. Major requirements are identified and the limitations of current UFMSIWLAN standards from an ABC viewpoint are pointed out.

WO 2015/012545 A1 discloses a wireless communication system. Specifically, the document relates to a method and a device for calculating an amount of data available for transmission in the wireless communication system. The method comprising inter alia: receiving ratio for calculating amount of Data Available for Transmission (DAT) in a PDCP (Packet Data Convergence Protocol) entity; calculating an amount of DAT when data is arrived in the PDCP entity; and setting a first amount of DAT as the calculated amount of DAT and a second amount of DAT as 'zero'.

US 2011/044168 A1 discloses a mobile radio connection having at least two uplink flows. A determination is made whether one of the uplink flows from a non-serving cell has a better radio link quality than another of the uplink flows from a serving cell. A congestion condition in the radio access transport network is monitored for those uplink flows.

### SUMMARY OF THE INVENTION

This invention is defined by the appended claims. Embodiments of the invention are set forth in the dependent claims. An objective of embodiments of the present invention is to provide an effective flow control scheme in a dual connectivity system.

According to a first aspect of the present invention, there is provided a method for flow control in a dual connectivity system. The method comprises obtaining first communication information of a secondary base station and second communication information of a primary base station, wherein the first communication information includes at least one of load information and channel information of the secondary base station, and the second communication information includes at least one of load information and channel information of the primary base station. The method also comprises determining a flow ratio for a first radio bearer based on the first communication information and the second communication information. The method further comprises transmitting the flow ratio to a user terminal.

According to one embodiment of the present invention, the load information of the secondary base station includes at least one of a total load of the secondary base station on all radio bearers and a load of the secondary base station on the first radio bearer, the channel information of the secondary base station includes at least one of a channel condition of the secondary base station and a channel quality indicator CQI of the secondary base station, the load information of the primary base station includes at least one of a total load of the primary base station on all radio bearers and a load of the primary base station on the first radio bearer, and the channel information of the primary base station includes at least one of a channel condition of the primary base station and a channel quality indicator CQI of the primary base station.

According to one embodiment of the present invention, the load information of the secondary base station is obtained from the secondary base station, the channel information of the secondary base station is obtained from the secondary base station or the user terminal, the load information of the primary base station is directly obtained from the primary base station, and the channel information of the primary base station is obtained from the user terminal.

According to one embodiment of the present invention, the first radio bearer is a splitting bearer.

According to one embodiment of the present invention, the flow ratio is transmitted to the user terminal through radio resource control RRC signaling.

According to one embodiment of the present invention, each of the load information of the secondary base station, the channel information of the secondary base station, and the channel information of the primary base station is transmitted periodically or according to a triggered event.

According to one embodiment of the present invention, the method further comprises receiving a feedback message reported by the user terminal with respect to the first radio bearer.

According to a further embodiment of the present invention, the flow ratio for the first radio bearer is determined, periodically or according to a triggered event, based on the first and second communication information and/or based on the feedback message.

According to one embodiment of the present invention, the feedback message is transmitted a control element of media access control MAC CE. The feedback message is reported periodically or according to a triggered event.

According to one embodiment of the present invention, the feedback message includes volumes of buffered data in buffer areas of the first radio bearer corresponding to the primary base station and the secondary base station, respectively. In one embodiment, the MAC CE includes buffer status reports BSR corresponding to the volumes of buffered data in the buffer areas corresponding to the primary base station and the secondary base station, respectively, and is identified by a new logical channel identifier LCID.

According to another embodiment of the present invention, the feedback message includes a ratio between volumes of buffered data in buffer areas of the first radio bearer corresponding to the primary base station and the secondary base station, respectively.

According to a further embodiment of the present invention, the feedback message includes a first indicator, and wherein the first indicator indicates whether the a ratio between volumes of buffered data in buffer areas of the first radio bearer corresponding to the primary base station and the secondary base station, respectively, is larger than a first threshold or smaller than a second threshold.

According to a still further embodiment of the present invention, the feedback message includes a second indicator and a third indicator, the second indicator indicates whether the volume of buffered data in a buffer area of the first radio bearer corresponding to the primary base station is larger than a third threshold or smaller than a fourth threshold, and the third indicator indicates whether the volume of buffered data in a buffer area of the first radio bearer corresponding to the secondary base station is larger than a fifth threshold or smaller than a sixth threshold.

According to a second aspect of the present invention, there is provided a method for flow control in a dual connectivity system. The method comprises receiving a flow ratio for a first radio bearer from a primary base station. The method further comprises determining, based on the flow ratio, data to be transmitted on the first radio bearer through the primary base station and the secondary base station, respectively; reporting a feedback message to the primary base station based on volumes of buffered data in buffer areas of the first radio bearer corresponding to the primary base station and the secondary base station, respectively.

According to one embodiment of the present invention, the flow ratio is received through radio resource control RRC signaling.

According to one embodiment of the present invention, the first radio bearer is a splitting bearer.

According to one embodiment of the present invention, determining, based on the flow ratio, data to be transmitted on the first radio bearer through the primary base station and the secondary base station respectively includes: determining first data to be transmitted to the primary base station and second data to be transmitted to the secondary base station based on the flow ratio and the total data to be transmitted; buffering the first data into a buffer area of the first radio bearer corresponding to the primary base station, so as to be transmitted to the primary base station; and buffering the second data into a buffer area of the first radio bearer corresponding to the secondary base station, so as to be transmitted to the secondary base station.

According to one embodiment of the present invention, the feedback message is transmitted via a control element of media access control MAC CE.

According to one embodiment of the present invention, the feedback message is reported to the primary base station periodically or according to a triggered event.

According to one embodiment of the present invention, the feedback message includes volumes of buffered data in the buffer areas of the first radio bearer corresponding to the primary base station and the secondary base station, respectively. In one embodiment, the MAC CE includes buffer status reports BSR corresponding to volumes of buffered data in the buffer areas corresponding to the primary base station and the secondary base station, respectively, and is identified by a new logical channel identifier LCID.

According to another embodiment of the present invention, the feedback message includes a ratio between volumes of buffered data in the buffer areas of the first radio bearer corresponding to the primary base station and the secondary base station, respectively.

According to further embodiment of the present invention, the feedback message includes a first indicator, and the first indicator indicates a ratio between data amounts in the buffer areas of the first radio bearer corresponding to the primary base station and the secondary base station, respectively, is larger than a first threshold or smaller than a second threshold.

According to a still further embodiment of the present invention, the feedback message includes a second indicator and a third indicator, the second indicator indicates whether the volume of buffered data in a buffer area of the first radio bearer corresponding to the primary base station is larger than a third threshold or smaller than a fourth threshold, and the third indicator indicates whether the buffered data mount in a buffer area of the first radio bearer corresponding to the secondary base station is larger than a fifth threshold or smaller than a sixth threshold.

According to a third aspect of the present invention, there is provided an apparatus for flow control in a dual connectivity system. The apparatus comprises an obtaining unit configured to obtain first communication information of a secondary base station and second communication information of a primary base station, wherein the first communication information includes at least one of load information and channel information of the secondary base station, and the second communication information includes at least one of load information and channel information of the primary base station. The apparatus also comprises a determining unit configured to determine a flow ratio for a first radio bearer based on the first communication information and the second communication information, to indicate to a user terminal how to allocate data volumes on the first radio bearer to be transmitted through the primary base station and the secondary base station respectively. The apparatus further comprises a transmitting unit configured to transmit the flow ratio to a user terminal.

According to a fourth aspect of the present invention, there is provided an apparatus for flow control in a dual connectivity system. The apparatus comprises a receiving unit configured to receive a flow ratio for a first radio bearer from a primary base station. The apparatus further comprises a determining unit configured to determine, based on the flow ratio, data to be transmitted on the first radio bearer through the primary base station and the secondary base station, respectively; reporting means for providing a feedback message to the primary base station based on volumes of buffered data in buffer areas of the first radio bearer corresponding to the primary base station and the secondary base station, respectively.

In various aspects of the present invention, the primary base station determines a flow ratio based on the first communication information and the second communication information, such that the user terminal effectively transmits based on the flow ratio, data on the first bearer through the primary base station and the secondary base station, respectively. Besides, the primary base station may also repetitively and dynamically adjust the flow ratio based on the first communication information and the second communication information as well as the feedback message from the user terminal periodically or according to a triggered event, such that the flow control scheme conforms to the varied channel conditions and load conditions, thereby achieving a more effective flow control.

### BRIEF DESCRIPTION OF THE ACCOMPANYING DRAWINGS

The above and other objectives, features, and advantages of the embodiments of the present invention will become more apparent from the detailed description below with reference to the accompanying drawings. In the drawings, several embodiments of the present invention are illustrated in an exemplary but not limitative way, wherein:
Fig. 1 shows a method implemented at a primary base station side for flow control in a dual connectivity system according to one embodiment of the present invention;
Fig. 2 shows a method implemented at a user terminal side for flow control in a dual connectivity system according to one embodiment of the present invention;
Fig. 3 shows a schematic diagram of data flow control in a user terminal according to embodiments of the present invention;
Fig. 4 shows an exemplary format of message for reporting volumes of buffered data according to embodiments of the present invention;
Fig. 5 shows a schematic diagram of information exchanging between a primary base station, a secondary base station, and a user terminal according to embodiments of the present invention;
Fig. 6 shows a schematic block diagram of an apparatus for flow control in a dual connectivity system according to one embodiment of the present invention; and
Fig. 7 shows a schematic block diagram of an apparatus for flow control in a dual connectivity system according to another embodiment of the present invention.

### DETAILED DESCRIPTION OF THE PREFERRED EMBODIMENTS

Hereinafter, the principle and spirit of the present invention will be described with reference to several exemplary embodiments illustrated in the drawings. It should be appreciated that these embodiments are described only for enabling those skilled in the art to better understand and then further implement the present invention, not intended to limit the scope of the present invention in any manner.

In a dual connectivity system, when two or more base stations transmit data for the same radio bearer, uplink communication involves the issue of performing flow control to data that is to be transmitted at a user terminal. With reasonable allocation of the data transmitted through the primary base station and through the secondary base station, data communication can be performed more effectively.

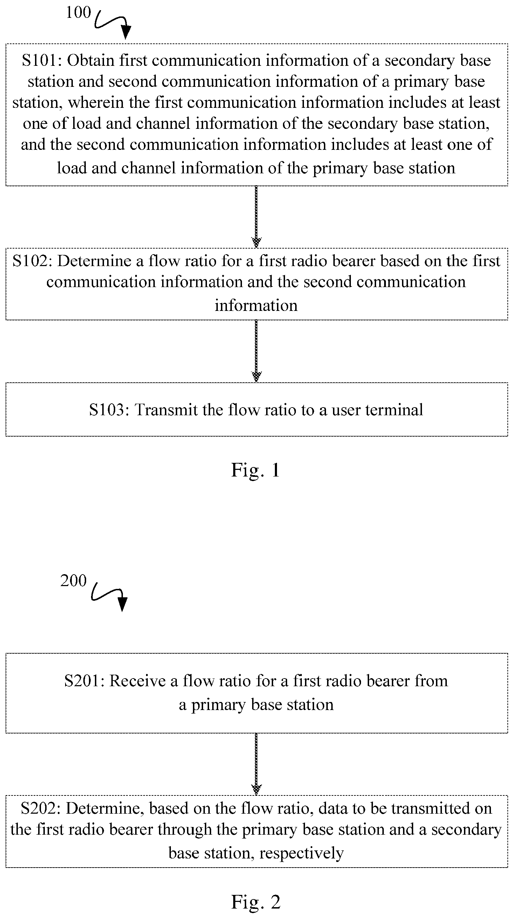

Fig. 1 shows a flowchart of a method 100 for flow control in a dual connectivity system according to embodiments of the present invention. The method 100 can be implemented at a primary base station side. It should be appreciated that various steps in method 100 may be executed in different orders and/or executed in parallel. The method 100 may also comprise additional steps and/or omit execution of an illustrated step(s). The scope of the present invention is not limited in this regard.

At step S101, the primary base station obtains first communication information of a secondary base station and second communication information of the primary base station, where the first communication information includes at least one of load information and channel information of the secondary base station, and the second communication information includes at least one of load information and channel information of the primary base station.

In a dual connectivity system, the primary base station may have a flow control functional module, such that the user terminal and the secondary base station may transmit information required for flow control to the flow control functional module of the primary base station, thereby a flow ratio being determined based on such information. It should be noted that in various embodiments of the present invention, a primary base station in the dual connectivity system may be a macro base station, a micro base station, a pico base station or the like in the communication network; while a secondary base station may also be a macro base station, a micro base station, a pico base station or the like in the communication network. The number of secondary base stations may be one, and may be plural in some other cases.

According to one embodiment of the present invention, the load information of the secondary base station includes at least one of a total load of the secondary base station on all radio bearers and a load of the secondary base station on the first radio bearer, and the channel information of the secondary base station includes at least one of a channel condition of the secondary base station and a CQI of the secondary base station. Moreover, the load information of the primary base station includes at least one of a total load of the primary base station on all radio bearers and a load of the primary base station on the first radio bearer, and the channel information of the primary base station includes at least one of a channel condition of the primary base station and a CQI of the primary base station.

In embodiments of the present invention, the primary base station and the secondary base station may server for one or more radio bearers, respectively. The first radio bearer refers to a bearer that needs flow control from the perspective of the user terminal currently. The user terminal has a dual connectivity to the primary base station and the secondary base station. For the user terminal currently in concern, the first radio bearer is a splitting bearer since data of the user terminal on the first radio bearer may be simultaneously transmitted through the primary base station and the secondary base station.

It should be noted that besides the load generated by the user terminal in concern on the first radio bearer, the load of the secondary base station on the first radio bearer may also include loads generated by other user terminals in the network on the first radio bearer. According to one embodiment of the present invention, the primary base station and the secondary base station may collect their own load information respectively. Further, for the function of flow control performed by the primary base station, the primary base station may obtain the load information of the secondary base station as transmitted from the secondary base station, and the primary base station may obtain its load information from itself. It would be appreciated that the load on all radio bearers and the load on the first radio bearer in concern, which are all included in the load information, may be transmitted in combination or separately.

In embodiments of the present invention, the channel condition of the secondary base station may include a reference signal receiving power (RSRP) or a reference signal receiving quality (RSRQ) from the secondary base station to the user terminal, or the like. Similarly, the channel condition of the primary base station may comprise a reference signal receiving power (RSRP) or a reference signal receiving quality (RSRQ) from the primary base station to the user terminal, or the like. In other embodiments of the present invention, the channel conditions of the primary base station and secondary base station may also additionally or alternatively include other parameters for indicating channel conditions.

According to one embodiment of the present invention, the user terminal may measure and determine the channel information of the primary base station and secondary base station, respectively, the channel information including channel conditions and CQI, etc. The user terminal may directly transmit to the primary base station the channel information of the primary base station. The user terminal may also directly transmit the channel information of the secondary base station to the primary base station, or transmit the channel information of the secondary base station first to the secondary base station, and then the secondary base station forwards the information to the primary base station. It would be appreciated that the channel condition and CQI included in the channel information may be transmitted in combination or separately.

The method 100 proceeds to step S102. At step S102, the primary base station determines a flow ratio for the first radio barer based on the first communication information and the second communication information.

In embodiments of the present invention, the flow ratio for the first radio bearer is used to indicate how the user terminal allocates data volumes on the first radio bearer to be transmitted through the primary base station and the secondary base station. In one embodiment, the flow radio may be a percentage of the data volume on the first radio bearer to be transmitted through the primary base station over the total data volume on the first radio bearer. In another embodiment, the flow ratio may be a percentage of the data volume on the first radio bearer to be transmitted through the secondary base station over the total data volume of the first radio bearer. In a further embodiment, the flow ratio may also be a ratio of the data volume on the first radio bearer to be transmitted through the primary base station to the data volume on the first radio bearer to be transmitted through the secondary base station, or the ratio of the data volume on the first radio bearer to be transmitted through the secondary base station to the data volume on the first radio bearer transmitted through the primary base station.

According to embodiments of the present invention, the primary base station receives, at step S101, the information from the user terminal and the secondary base station as well as the information obtained from itself. Based on such information, the primary base station may acknowledge the current channel condition and load condition of the primary and secondary base stations and then determine a flow ratio for flow control based on the channel condition and load condition, so as to enable effective data transmission of the user terminal.

In one embodiment, when the channel condition between the secondary base station and the user terminal is better than that between the primary base station and the user terminal, a flow ratio may be determined such that the user terminal allocates a larger volume of data to the secondary base station for transmission. In another embodiment, when the load condition of the secondary base station is smaller than that of the primary base station, a flow ratio may be determined such that the user terminal allocates a larger volume of data to the secondary base station for transmission. In a further embodiment, the channel condition and load condition of the secondary base station may be considered in combination to determine the volume of data allocated to the secondary base station for transmission. For the primary base station, the same principle applies.

It should be noted that when the primary base station determines a flow ratio based on the first communication information and the second communication information, some or all information (for example, channel information and load information) included in the first and second communication information may be utilized. The present invention has no limitation in this regard.

The method 100 then proceeds to step S103. At step S103, the primary base station transmits the flow ratio to the user terminal.

According to embodiments of the present invention, the flow ratio is transmitted to the user terminal through radio resource control (RRC) signaling. According to other embodiments of the present invention, the flow ratio may also be transmitted to the user terminal through other signaling or messages.

According to the above method 100, a flow ratio for the first radio bearer is determined at the primary base station side and transmitted to the user terminal, such that the user terminal performs flow control based on the flow ratio.

Fig. 2 shows a flowchart of a method 200 for flow control in a dual connectivity system according to embodiments of the present invention. The method 200 may be implemented at a user terminal side. It should be appreciated that various steps in method 200 may be executed in different orders and/or executed in parallel. The method 200 may also comprise additional steps and/or omit execution of an illustrated step(s). The scope of the present invention is not limited in this regard.

In various embodiments of the present invention, the user terminal may be any kind of mobile terminal, fixed terminal, or portable terminal, including a mobile phone, a multimedia computer, a multimedia tablet, a desktop computer, a laptop computer, a notebook computer, an netbook computer, a tablet computer, a personal communication system (PCS) device, a personal navigation device, a personal digital assistant (PDA), an audio/video player, a digital camera/ video camera, a positioning device, a television receiver, a radio broadcast receiver, an electronic book device, or an arbitrary combination thereof, including accessories and peripheries of these devices or their arbitrary combinations. It may also be predicted that the user terminal may support any kind of interface for a user (for example, a "wearable" circuit, etc.).

At step S201, the user terminal receives a flow ratio for a first radio bearer from a primary base station.

As discussed above, the first radio bearer is a splitting bearer for the user terminal in concern, because data on the first radio bearer may be transmitted through a plurality of base station.

According to one embodiment of the present invention, the user terminal may receive RRC signaling, which carries the flow ratio and is transmitted from the primary base station. According to other embodiments of the present invention, the user terminal may also receive another signaling or message that carries a flow ratio and transmitted from the primary base station.

The method 200 proceeds to step S202, where the user terminal determines, based on the flow ratio, data to be transmitted on the first radio bearer through the primary base station and the secondary base station, respectively.

In embodiments of the present invention, the flow ratio may be used to determine how much data is specifically transmitted through the primary base station while how much data is transmitted through the secondary base station. According to one embodiment of the present invention, determining, based on the flow ratio, data to be transmitted on the first radio bearer through the primary base station and the secondary base station respectively includes: determining first data to be transmitted to the primary base station and second data to be transmitted to the secondary base station based on the flow ratio and the total data to be transmitted; buffering the first data into a buffer area of the first radio bearer corresponding to the primary base station, so as to be transmitted to the primary base station; and buffering the second data into a buffer area of the first radio bearer corresponding to the secondary base station, so as to be transmitted to the secondary base station. In this embodiment, the total data to be transmitted refers to the total data on the first radio bearer that will be transmitted.

In various embodiments of the present invention, dependent on different forms of the flow ratio, the first data and the second data may be determined in different manners. In one embodiment, if the flow ratio is a percentage of the data volume on the first radio bearer to be transmitted through the primary base station over the total volume of to-be-transmitted data, the first data is a product of the total volume of to-be-transmitted data and the flow ratio, while the second data is a difference between the total volume of to-be-transmitted data and the first data. In another embodiment, if the flow ratio is a percentage of the data volume on the first radio bearer to be transmitted through the secondary base station over the total volume of to-be-transmitted data, the second data is a product of the total volume of to-be-transmitted data and the flow ratio, while the first data is the difference between the total volume of to-be-transmitted data and the second data. In a further embodiment, if the flow ratio is a ratio of the data volume on the first radio bearer to be transmitted through the primary base station to the data volume on the first radio bearer transmitted through the secondary base station, or if the flow ratio is a ratio of the data volume on the first radio bearer to be transmitted through the secondary base station to the data volume on the first radio bearer to be transmitted through the primary base station, the total volume of to-be-transmitted data is divided such that the first data and the second data satisfy the percentage indicated by the flow ratio. In other embodiments, other methods may also be employed to calculate the first data and the second data. The present invention has no specific limitation thereto.

In embodiments of the present invention, the user terminal may have radio link control (RLC) entities corresponding to the primary base station and the secondary base station, respectively. When the to-be-transmitted data is generated at the packet data convergence protocol (PDCP) layer, it will be divided into corresponding first data and second data based on the flow ratio. The first data of the primary base station may be buffered into a buffer area in the RLC entity of the primary base station, while the second data of the secondary base station may be buffered into a buffer area of the RLC entity of the secondary base station. The data buffered in the buffer areas wait for schedulers of the primary base station and secondary base station to allocate resources for them. After corresponding resources are allocated, the corresponding data buffered in the buffer areas will be transmitted to the primary base station and the secondary base station using the allocated resources.

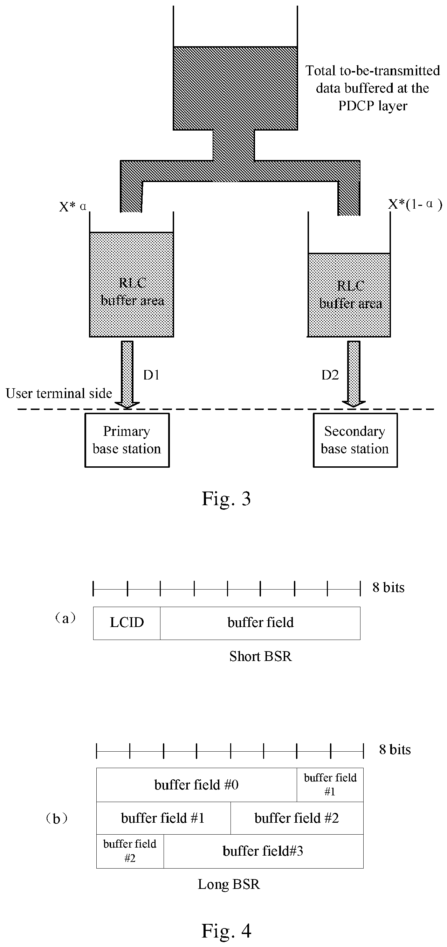

For example, as shown in Fig. 3, suppose that the flow ratio received from the primary base station is α, which indicates the percentage of the data volume on the first radio bearer to be transmitted through the primary base station over the total volume of to-be-transmitted data, and the total volume of to-be-transmitted data generated at the PDCP layer is X. Based on the flow ratio α and the total volume of to-be-transmitted data X, the data volume X^{∗}α is buffered into a buffer area of the RLC entity corresponding to the primary base station, while the data volume X^{∗}(1-α) is buffered into a buffer area of the RLC entity corresponding to the secondary base station. The data volumes in the two buffer areas need to wait for the schedulers of the primary and secondary base stations to allocate resources for them, such that they can be transmitted to the primary base station and the secondary base station using the allocated resources.

Based on the above method 100, the primary base station may determine a flow ratio based on information obtained from the user terminal and the secondary base station, and from itself, and transmit the flow ratio to the user terminal. Based on the above method 200, the user terminal may determine the data volumes to be transmitted through the primary and secondary base stations based on the received flow ratio.

However, since the load information of the primary base station and the secondary base station will constantly change over time, the channel qualities of the primary and secondary base stations with the user terminal will also constantly change over time, and the user terminal may periodically obtain the channel information of the primary and secondary base stations. Therefore, in a further embodiment of the present invention, each of the load information and channel information of the secondary base station and the channel information of the primary base station is periodically transmitted, or is transmitted according to a triggered event.

In one embodiment, if change of the load or channel information (e.g., total load, the load on the first radio bearer, the channel condition, or CQI) of the secondary base station exceeds a predetermined threshold relative to the load or channel information previously transmitted to the primary base station, it will be triggered to transmit the load or channel information of the secondary base station to the primary base station. What is transmitted may be only a parameter whose variation exceeds a predetermined threshold or may be all parameters included in the load and channel information of the secondary base station. For the channel information of the primary base station, a similar principle may be employed to trigger transmission of the channel information from the user terminal to the primary base station.

According to another embodiment of the present invention, regardless of transmitting the load information and channel information of the secondary base station and channel information of the primary base station periodically or by an triggered event, the re-transmitted load or channel information may be load or channel information at current time, or an average value of multiple pieces of load or channel information measured during the time interval from the last transmission, or any measurement value in the multiple pieces of load or channel information measured.

In order to enable the flow ratio used by the user terminal to dynamically vary based on the channel conditions and load conditions of the primary and secondary base stations, the primary base station may also determine a flow ratio for the first radio bearer based on the first communication information and the second communication information periodically or according to a triggered event.

In one embodiment, in the case of periodical determination, if new information reported by the secondary base station or the user terminal is not received within the period, the flow ratio may be determined based on the current load information of the primary base station, the previously received channel information of the primary base station, and the load and channel information of the secondary base station. In another embodiment, if the variation of the load or channel information (e.g., the total load, the load on the first radio bearer, the channel condition, or CQI) of the primary base station exceeds a predetermined threshold relative to the previous load or channel information of the primary base station, then it will be triggered to determine the flow ratio. In a further embodiment, if the variation of the load or channel information (e.g., the total load, the load on the first radio bearer, the channel condition, or CQI) of the secondary base station exceeds a predetermined threshold relative to the previous load or channel information of the secondary base station, then it will be triggered to determine the flow ratio. In other embodiments, the primary base station may trigger determination of the flow ratio when receiving the load information or the channel information reported by the user terminal or the secondary base station.

After the primary base station re-determines the flow ratio, the determined flow ratio may be either identical to or different from the previously determined flow ratio. In one embodiment, regardless of whether the determined flow ratio is different from the previously determined flow ratio, the determined flow ratio will be transmitted to the user terminal. In other embodiments, the determined flow ratio is transmitted to the user terminal only when the determined flow ratio is different from the previously determined flow ratio, such that the user terminal re-determines the data volumes to be transmitted through the primary base station and the secondary base station based on the changed flow ratio.

Although the flow control for the first radio bearer is described above, for a given user terminal, there might be a plurality of radio bearers (i.e., splitting bearers) that need flow control, and each of the radio bearers may be subject to the flow control according to the methods in the above various embodiments.

A process of determining a flow ratio for flow control is described above based on the first and second communication information and re-determining a flow ratio periodically or according to a triggered event based on updated first communication information and second communication information. Next, a further process of determining a flow ratio based on a feedback message from the user terminal will be discussed.

Because a scheduler of the primary base station and a scheduler of a secondary base station perform distributed scheduling, the primary base station cannot be aware of how much data amount is currently actually scheduled by the secondary base station. Therefore, it is possible that data in the user terminal is not transmitted according to the flow ratio as desired by the primary base station.

For example, still refer to Fig. 3. As indicated above, for the total data X to be transmitted at the user terminal, the data volume X^{∗}α is buffered in the buffer area of the RLC entity corresponding to the primary base station, while the data volume X^{∗}(1-α) is buffered in the buffer area of the RLC entity corresponding to the secondary base station. The schedulers in the primary and secondary base stations allocate resources to the user terminal based on their own resource utilizations, so as to transmit the buffered data in the corresponding RLC entities. Therefore, based on the allocated resources, suppose that the actual data volume transmitted from the buffer area of the corresponding RLC entity of the primary base station is D1, and the actual data volume transmitted from the buffer area of the corresponding RLC entity of the secondary base station is D2. As expected from the flow control of the primary base station, D1:D2 should be equal to α: (1-α). However, since the channel conditions, load conditions, and resource utilizations of the primary and secondary base stations change constantly, the schedulers of the primary base station and the secondary base station might not schedule data in the corresponding buffer areas as expected from the flow control. Therefore, it may result in that the volume of buffered data in one buffer area is large, while the volume of buffered data in the other buffer area is small. In extreme circumstances, it may be even possible that one buffer area is fully filled, while the other buffer area is empty.

In order to deal with the above situations, a further embodiment of the present invention provides a method of dynamically adjusting the flow ratio based on feedback from the user terminal side.

At the user terminal side, the user terminal may report a feedback message to the primary base station based on volumes of buffered data in the buffer areas of the first radio bearer corresponding to the primary base station and the secondary base station, respectively.

At the primary base station side, the primary base station may receive the feedback message reported by the user terminal for the first radio bearer, and may determine a flow ratio based on the feedback message. In one embodiment, the primary base station determines a flow ratio for the first radio bearer based on the feedback message periodically or according to a triggered event. For the manner of periodical calculating, the primary base station may not perform calculation immediately after receiving the feedback message, but may perform calculation upon arrival of the predetermined time period. For the manner of event-triggered calculation, the primary base station may immediately perform calculation upon reception of the feedback message, or determines whether to trigger the calculation, as discussed in details below, based on the specific content of the feedback message.

In one embodiment, the feedback message may be transmitted via a control element of media access control (MAC CE). In other embodiments, the feedback message may also be transmitted through other signaling.

According to various embodiments of the present invention, the feedback message may include one of information (1) - (4) or a combination thereof, so as to feed back states of the buffer areas corresponding to the primary base station and secondary base station.

(1) The feedback message includes volumes of buffered data in the buffer areas of the first radio bearer corresponding to the primary base stations and the secondary base stations, respectively.

Report of the feedback message is similar to a conventional buffer status report, except that what is reported by a legacy buffer state report is the volumes of buffered data of the user equipment on all radio bearers, while the feedback message of the present invention only reports the volumes of buffered data in the buffer areas of the radio bearer in concern (i.e., the splitting bearer) corresponding to the primary base station and the secondary base station, respectively. In addition, besides the trigger mechanism identical to that for a conventional buffer status report (e.g., a periodical trigger or an event trigger), there are also other specific trigger mechanisms for the feedback message of the present invention. For example, report of the feedback message may be triggered when a percentage of the data amount in the buffer area of the first radio bearer corresponding to the primary base station over the volume of buffered data in the buffer area of the first radio bearer corresponding to the secondary base station is larger than a predetermined threshold or smaller than another predetermined threshold. Values of the predetermined thresholds may be set according to the actual conditions, and the present invention has no limitation thereto. It should be noted that if a legacy buffer status report and the feedback message of the present invention are simultaneously triggered for transmission, in one embodiment, with regard to the buffer status report corresponding to the primary base station, only the legacy buffer status report is transmitted since it includes content of the feedback message; besides, the buffer status report for the first radio bearer corresponding to the secondary base station may also be reported. In a further embodiment, with regard to the buffer status reports corresponding to the primary base station and secondary base station, only the conventional buffer status report may be transmitted since it includes content of the feedback message.

The feedback message may be transmitted by MAC CE. Since it is the volumes of buffered data that need to be reported, according to embodiments of the present invention, the MAC CE may include buffer status reports BSR corresponding to the volumes of buffered data in the buffer areas corresponding to the primary base station and the secondary base station, and may be identified by a new logical channel identifier (LCID). In one embodiment, a BSR may occupy 6 bits, as shown in Fig. 4A. In other embodiments, a BSR may also occupy more or less bits, and the present invention has no limitation thereto.

According to embodiments of the present invention, if only a feedback message for a splitting bearer is reported, the volumes of buffered data in the buffer areas corresponding to the primary and secondary base stations may be respectively identified by two short BSRs. Moreover, the volumes of buffered data on the splitting bearer corresponding to the primary and secondary base stations may be placed in the MAC CE in a predetermined order, and a new LCID identifier is used to identify that current feedback message has two short BSRs; that is, a feedback message for one radio splitting bearer is included only and the feedback information includes volumes of buffered data in the buffer areas corresponding to the primary and secondary base stations. Since the user terminal may use a plurality of splitting bearers, according to another embodiment of the present invention, long BSRs may be used to identify volumes of buffered data in the buffer areas of multiple radio bearers corresponding to the respective primary and secondary base stations. Moreover, volumes of buffered data in the buffer areas of the multiple radio bearers corresponding to the primary and secondary base stations may be placed into the MAC CE in a predetermined order. For example, as shown in Fig. 4B, suppose that there are 4 splitting bearers. The volumes of buffered data in the buffer areas of the 4 radio bearers corresponding to the primary base station may be transmitted using a long BSR in Fig. 4B, where each splitting bearer corresponds to a corresponding buffer field #0-#3. A secondary base station may also use a similar long BSR. Besides, a new LCID may also be used to identify that the current feedback message MAC CE has two long BSRs, including a long BSR corresponding to the primary base station and a long BSR corresponding to the secondary base station. It should be noted that the transmission format of the feedback message is only exemplarily illustrated above through specific numerical values. Besides the above illustrated format, other formats may also be used to report the feedback message.

(2) The feedback message includes a ratio between volumes of buffered data in buffer areas of the first radio bearer corresponding to the primary base station and the secondary base station, respectively.

In this embodiment, the user equipment calculates a ratio therebetween based on the volumes of buffered data in the buffer areas of the first radio bearer corresponding to the primary base station and the secondary base station, respectively and then transmits the calculated ratio as a feedback message to the primary base station. The number of bits occupied by the feedback message is related to the granularity of the calculated ratio. If the granularity is relatively fine, the number of bits used for transmitting the feedback message will be larger; otherwise, if the granularity is relatively coarse, the number of bits for transmitting the feedback message is smaller.

In embodiments of the present invention, the feedback message may be reported periodically or according to a triggered event. In one embodiment, when the calculated ratio is larger than a predetermined threshold or smaller than a further threshold, report of the feedback message is triggered. Values of the predetermined thresholds may be set according to the actual conditions, and the present invention has no specific limitation thereto.

(3) The feedback message includes a first indicator, which first indicator indicating whether a ratio between volumes of buffered data in buffer areas of the first radio bearer corresponding to the primary base station and the secondary base station, respectively, is larger than a first threshold or smaller than a second threshold.

In this embodiment, the feedback message is reported to the primary base station according to a triggered event. For example, in case that the value of the first indicator can be determined, the user terminal reports the feedback message including the first indicator to the primary base station.

In one example, the first indicator occupies one bit. In other examples, the first indicator may occupy more bits. When the ratio for the volume of buffered data in the buffer area of the first radio bearer corresponding to the primary base station is larger than the first threshold, the first indicator is set to "1"; otherwise, it is set to "0." In another example, when the ratio for the volume of buffered data in the buffer area of the first radio bearer corresponding to the primary base station is smaller than the second threshold, the first indicator is set to "1"; otherwise, it is set to "0." The first threshold and the second threshold may be identical or different, and their values may be set based on actual conditions. The present invention has no specific limitation thereto.

(4) The feedback message includes a second indicator and a third indicator, where the second indicator indicates whether the volume of buffered data in the buffer area of the first radio bearer corresponding to the primary base station is larger than a third threshold or smaller than a fourth threshold, and the third indicator indicates whether the volume of buffered data in the buffer area of the first radio bearer corresponding to the secondary base station is larger than the fifth threshold or smaller than the sixth threshold.

In this embodiment, the feedback message is reported to the primary base station according to a triggered event. For example, in case that the value of the second indicator or the value of the third indicator can be determined, the user terminal reports a feedback message including the second indicator and the third indicator to the primary base station.

In one example, the second indicator and the third indicator occupy one bit, respectively. In other examples, the second indicator or the third indicator may occupy more bits.

In one example, when the volume of buffered data in the buffer area of the first radio bearer corresponding to the primary base station is larger than the third threshold, the second indicator is set to "1"; otherwise, it is set to "0." In another example, when the volume of buffered data in the buffer area of the first radio bearer corresponding to the primary base station is smaller than the fourth threshold, the second indicator is set to "1"; otherwise, it is set to "0."

In a further example, when the volume of buffered data in the buffer area of the first radio bearer corresponding to the secondary base station is larger than a fifth threshold, the third indicator is set to "1"; otherwise, it is set to "0." In a still further example, when the volume of buffered data in the buffer area of the first radio bearer corresponding to the secondary base station is smaller than the sixth threshold, the third indicator is set to "1"; otherwise, it is set to "0."

In the above examples, the third, fourth, fifth, and sixth thresholds may be identical or different. Their values may be set according to actual conditions, and the present invention has no specific limitation thereto.

It has been described above that the user terminal reports a feedback message and the primary base station determines a flow ratio based on the feedback message.

Furthermore, since the first and second communication information and the feedback message may all be transmitted to the primary base station periodically or according to a triggered event, when determining the flow ratio, the primary base station may also comprehensively consider the first and second communication information and the feedback message. Therefore, according to a further embodiment of the present invention, the primary base station determines the flow ratio for the first radio bearer based on the first and second communication information and/or the feedback message periodically or according to a triggered event.

After the primary base station re-determines the flow ratio, the determined flow ratio might be either identical to or different from the previously determined flow ratio. In one embodiment, regardless of whether the determined flow ratio is different from the previously determined flow ratio, the determined flow ratio will be transmitted to the user terminal. In other embodiments, the determined flow ratio is transmitted to the user terminal only when the determined flow ratio is different from the previously determined flow ratio, such that the user terminal re-determines the data volumes allocated to be transmitted through the primary base station and the secondary base station based on the changed flow ratio.

It has been described above that the primary base station determines a flow ratio based on the first and second communication information such that the user terminal effectively transmits the data on the first bearer through the primary base station and the secondary base station respectively based on the flow ratio. Besides, the primary base station may also dynamically and repetitively adjust the flow ratio based on the first and second communication information and the subsequent feedback message from the user terminal periodically or according to a triggered event, such that the flow control scheme conforms to the changed channel condition and load condition, thereby achieving a more effective flow control.

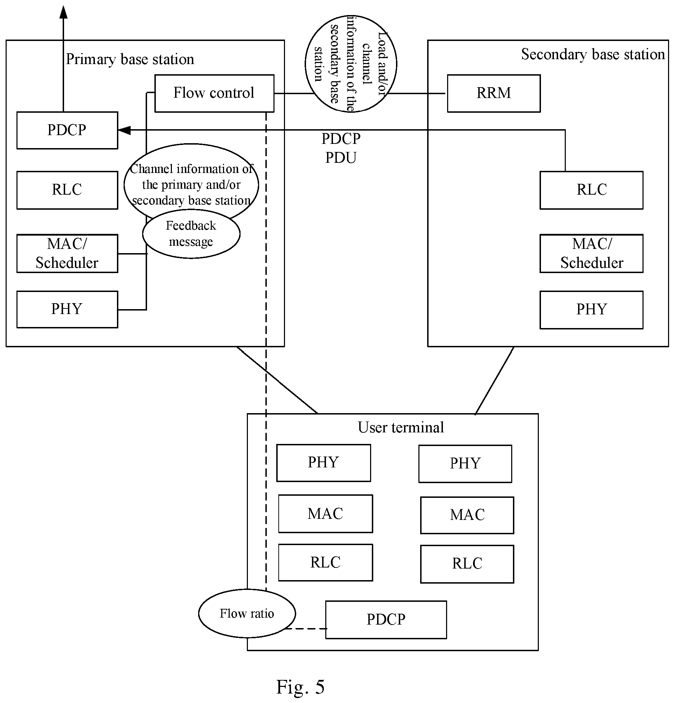

Fig. 5 shows a schematic diagram of some but not all layers, units, or functional modules of a primary base station, a secondary base station, and a user terminal as well as information exchanging therebetween according to embodiments of the present invention.

In Fig. 5, the secondary base station collects its own channel information and/or load information and stores them in a RRM unit (in other examples, they may also be stored in other components) so as to be transmitted to the flow control unit of the primary base station periodically or according to a triggered event. In other examples, the secondary base station may store the collected channel information and/or load information in other units so as to be transmitted to the primary base station later, or may directly transmit them to the primary base station.

In Fig. 5, the user terminal transmits the channel information of the primary base station and/or the channel information of the secondary base station to the primary base station periodically or according to a triggered event, and transmits a feedback message to the primary base station periodically or according to a triggered event. The channel information of the primary base station and/or the channel information of the secondary base station, or the feedback message transmitted by the user terminal may be transmitted to a MAC layer of the primary base station, and where necessary, the MAC layer transmits them to the flow control unit to facilitate determination of the flow ratio. In other examples, the channel information of the primary base station and/or the channel information of the secondary base station, or the feedback message transmitted by the user terminal may also be transmitted to other layers, units or functional modules of the primary base station via other layers, units or functional modules of the user terminal.

In Fig. 5, the flow control unit of the primary base station determines a flow ratio based on the received information periodically or according to a triggered event. Then, the primary base station transmits the flow ratio to the user terminal. If the flow ratio is transmitted through the RRC signaling, then the flow ratio may be transmitted to the physical (PHY) layer of the user terminal, then may be transmitted to the PDCP layer after being subject to operations such as parsing and extracting at the PHY layer, MAC layer, and RLC layer. In other examples, the flow ratio may be transmitted via other signaling, and may be transmitted to the PDCP layer of the user terminal via other layers, units, or functional modules.

The PDCP layer of the user terminal determines, based on the flow ratio, data to be transmitted on the first radio bearer through the primary base station and the secondary base station, respectively.

The above flow control process may be constantly performed in periodicity or according to a triggered event. It should be noted that Fig. 5 is only shown for the exemplary purposes. Besides the layers, units, or functional modules as shown in Fig. 5, the primary base station, secondary base station, and user terminal may also consist of other layers, units, or functional modules. Moreover, besides the information interactions shown in the figure, there may also be other information interactions between the primary base station, secondary base station, and user terminal.

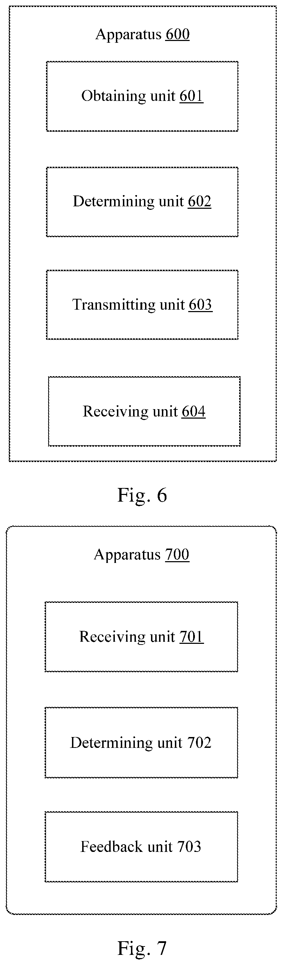

Fig. 6 shows a schematic block diagram of an apparatus 600 for flow control in a dual connectivity system according to one embodiment of the present invention. The apparatus 600 may be a primary base station in a dual connectivity system or included in the primary base station. As shown in Fig. 6, the apparatus 600 comprises an obtaining unit 601 configured to obtain first communication information of a secondary base station and second communication information of a primary base station, wherein the first communication information includes at least one of load information and channel information of the secondary base station, and the second communication information includes at least one of load information and channel information of the primary base station. The apparatus 600 further comprises a determining unit 602 configured to determine a flow ratio for a first radio bearer based on the first communication information and the second communication information, and a transmitting unit 603 configured to transmit the flow ratio to a user terminal.

According to one embodiment of the present invention, the load information of the secondary base station includes at least one of a total load of the secondary base station on all radio bearers and a load of the secondary base station on the first radio bearer, the channel information of the secondary base station includes at least one of a channel condition of the secondary base station and a channel quality indicator CQI of the secondary base station, the load information of the primary base station includes at least one of a total load of the primary base station on all radio bearers and a load of the primary base station on the first radio bearer; and the channel information of the primary base station includes at least one of a channel condition of the primary base station and a channel quality indicator CQI of the primary base station.

According to one embodiment of the present invention, the load information of the secondary base station is obtained from a secondary base station, the channel information of the secondary base station is obtained from the secondary base station or the user terminal, the load information of the primary base station is directly obtained from the primary base station, and the channel information of the primary base station is obtained from the user terminal.

According to one embodiment of the present invention, the first radio bearer is a splitting bearer. According to another embodiment of the present invention, the flow ratio is transmitted to the user equipment through radio resource control RRC signaling.

According to one embodiment of the present invention, each of the load information and the channel information of the secondary base station and the channel information of the primary base station is transmitted periodically or according to a triggered event.

According to one embodiment of the present invention, the apparatus 600 further comprises a receiving unit 604 configured to receive a feedback message reported by the user terminal with respect to the first radio bearer.

According to one embodiment of the present invention, the determining unit 602 is further configured to determine the flow ratio for the first radio bearer, periodically or according to a triggered event, based on the first and second communication information and/or based on the feedback message.

According to one embodiment of the present invention, the feedback message is transmitted via a control element of media access control MAC CE. The feedback message is reported periodically or according to a triggered event.

According to one embodiment of the present invention, the feedback message includes volumes of buffered data in buffer areas corresponding to the primary base station and the secondary base station, respectively. In one embodiment, the MAC CE includes buffer status reports BSR corresponding to the volumes of buffered data in the buffer areas corresponding to the primary base station and the secondary base station, respectively and is identified by a new logical channel identifier LCID.

According to another embodiment of the present invention, the feedback message includes a ratio between volumes of buffered data in buffer areas of the first radio bearer corresponding to the primary base station and the secondary base station, respectively.

According to a further embodiment of the present invention, the feedback message includes a first indicator, and the first indicator indicates whether a ratio between volumes of buffered data in buffer areas of the first radio bearer corresponding to the primary base station and the secondary base station, respectively, is larger than a first threshold or smaller than a second threshold.

According to a still further embodiment of the present invention, the feedback message includes a second indicator and a third indicator, the second indicator indicates whether the volume of buffered data in a buffer area of the first radio bearer, corresponding to the primary base station is larger than a third threshold or smaller than a fourth threshold, and the third indicator indicates whether the volume of buffered data in a buffer area of the first radio bearer corresponding to the secondary base station is larger than a fifth threshold or smaller than a sixth threshold.

Fig. 7 shows a schematic block diagram of an apparatus 700 for flow control in a dual connectivity system according to another embodiment of the present invention. The apparatus 700 may be a user terminal or included in the user terminal. As shown in Fig. 7, the apparatus 700 comprises a receiving unit 701 configured to receive a flow ratio for a first radio bearer from a primary base station. The apparatus 700 further comprises a determining unit 702 configured to determine, based on the flow ratio, data to be transmitted on the first radio bearer through the primary base station and a secondary base station, respectively.

According to one embodiment of the present invention, the flow ratio is received through radio resource control RRC signaling. According to another embodiment of the present invention, the first radio bearer is a splitting bearer.

According to one embodiment of the present invention, the determining unit 702 is further configured to: determine first data to be transmitted to the primary base station and second data to be transmitted to the secondary base station based on the flow ratio and the total data to be transmitted; buffer the first data into a buffer area of the first radio bearer corresponding to the primary base station, so as to be transmitted to the primary base station; and buffer the second data into a buffer area of the first radio bearer corresponding to the secondary base station, so as to be transmitted to the secondary base station.

According to one embodiment of the present invention, the apparatus 700 further comprises a feedback unit 703 configured to report a feedback message to the primary base station based on volumes of buffered data in buffer areas of the first radio bearer corresponding to the primary base station and the secondary base station, respectively.

According to one embodiment of the present invention, the feedback message is transmitted to control element of media access control MAC CE. According to one embodiment of the present invention, the feedback message is reported to the primary base station periodically or according to a triggered event.

According to one embodiment of the present invention, the feedback message includes volumes of buffered data in the buffer areas of the first radio bearer corresponding to the primary base station and the secondary base station, respectively. In one embodiment, the MAC CE includes buffer status reports BSR corresponding to volumes of buffered data in the buffer areas corresponding to the primary base station and the secondary base station, respectively, and is identified by a new logical channel identifier LCID.

According to another embodiment of the present invention, the feedback message includes a ratio between volumes of buffered data in buffer areas of the first radio bearer corresponding to the primary base station and the secondary base station, respectively.

According to further embodiment of the present invention, the feedback message includes a first indicator, and the first indicator indicates the ratio between data amounts in the buffer areas of the first radio bearer corresponding to the primary base station and the secondary base station, respectively, is larger than a first threshold or smaller than a second threshold.

According to a still further embodiment of the present invention, the feedback message includes a second indicator and a third indicator, the second indicator indicates whether a volume of buffered data in a buffer area of the first radio bearer corresponding to the primary base station is larger than a third threshold or smaller than a fourth threshold, and the third indicator indicates whether a volume of buffered data in a buffer area of the first radio bearer corresponding to the secondary base station is larger than a fifth threshold or smaller than a sixth threshold.

It is seen that the apparatus 600 in Fig. 6 and the apparatus 700 in Fig. 7 may implement the methods shown in Figs. 1 and 2, respectively. Although not further shown, the apparats 600 and apparatus 700 may further comprise more functional units so as to implement a plurality of embodiments described in conjunction with the method 100 of Fig. 1 and method 200 of Fig. 2.

It should be noted that the embodiments of the present invention may be implemented through hardware, software, or a combination of software and hardware. The hardware portion may be implemented through a dedicated logic; the software portion may be stored in a memory and executed by an appropriate instruction executing system, e.g., a microprocessor or a dedicatedly designed hardware. A person of ordinary skilled in the art may understand that the above apparatuses and methods may be implemented using computer executable instructions and/or included in processor control codes; for example such codes may be provided in carrier medium such as disks, CDs or DVD-ROMs, programmable memories such as read-only memories (firmware), or data carriers such as optical or electronic signal carriers. The apparatuses according to the present invention, as well as their modules, may be implemented by hardware circuits such as very large-scale integrated circuits or gate arrays, semiconductors such as logic chips, transistors, etc., or programmable hardware devices such as field programmable gate arrays, programmable logic devices, etc., or may be implemented by software executed by various kinds of software, or implemented by a combination of the above hardware circuits and software, e.g., firmware.

It should be noted that although a plurality of modules and sub-modules of the apparatuses have been mentioned in the above detailed description, such dividing is only non-compulsory. Actually, according to embodiments of the present invention, the features and functions of two or more modules above described may be embodied in one module. On the contrary, features and functions of one module described above may be further divided into a plurality of modules to instantiate.

Besides, although operations of the methods of the present invention have been described at particular sequences in the drawings, it does not require or suggest that these operations should be executed according to the particular sequences, or a desired result can only be achieved by performing all of the shown operations. On the contrary, the steps depicted in the flowcharts may change the execution sequences. Additionally or alternatively, some steps may be omitted, a plurality of steps may be reduced to one step for execution, and/or one step may be decomposed into a plurality of steps for execution.

Although the present invention has been described with reference to a plurality of preferred embodiments, it should be appreciated that the present invention is not limited to the specific embodiments disclosed.

## Claims

1. A method for flow control in a dual connectivity system comprising a primary base station and a secondary base station, the method being implemented at the primary base station and comprising:
obtaining (S101) first communication information of the secondary base station and second communication information of the primary base station, wherein the first communication information includes at least one of load information and channel information of the secondary base station, and the second communication information includes at least one of load information and channel information of the primary base station;
determining (S 102) a flow ratio for a first radio bearer based on the first communication information and the second communication information_to indicate to a user terminal how to allocate data volumes on the first radio bearer to be transmitted through the primary base station and the secondary base station respectively; and
transmitting (S103) the flow ratio to said user terminal.

2. The method according to claim 1, wherein the load information of the secondary base station includes at least one of a total load of the secondary base station on all radio bearers and a load of the secondary base station on the first radio bearer, the channel information of the secondary base station includes at least one of a channel condition of the secondary base station and a channel quality indicator CQI of the secondary base station, the load information of the primary base station includes at least one of a total load of the primary base station on all radio bearers and a load of the primary base station on the first radio bearer, and the channel information of the primary base station includes at least one of a channel condition of the primary base station and a channel quality indicator CQI of the primary base station.

3. The method according to claim 1, wherein the load information of the secondary base station is obtained from the secondary base station, the channel information of the secondary base station is obtained from the secondary base station or the user terminal, the load information of the primary base station is directly obtained from the primary base station, and the channel information of the primary base station is obtained from the user terminal.

4. The method according to claim 1, wherein each of the load information and the channel information of the secondary base station and the channel information of the primary base station is transmitted periodically or according to a triggered event.

5. The method according to any one of claims 1 to 4, further comprising:
receiving a feedback message reported by the user terminal with respect to the first radio bearer, and
wherein the flow ratio for the first radio bearer is determined, periodically or according to a triggered event, based on the first and second communication information and/or based on the feedback message.

6. The method according to claim 5, wherein the feedback message is transmitted via a control element of media access control MAC CE, and wherein the feedback message is reported periodically or according to a triggered event.

7. The method according to claim 5, wherein the feedback message includes volumes of buffered data in buffer areas of the first radio bearer corresponding to the primary base station and the secondary base station, respectively, and wherein the MAC CE includes buffer status reports BSR corresponding to the volumes of buffered data in the buffer areas corresponding to the primary base station and the secondary base station, respectively, and is identified by a new logical channel identifier LCID.

8. The method according to claim 5, wherein the feedback message includes a ratio between volumes of buffered data in buffer areas of the first radio bearer corresponding to the primary base station and the secondary base station, respectively.

9. The method according to claim 5, wherein the feedback message includes a first indicator, and wherein the first indicator indicates whether the a ratio between volumes of buffered data in buffer areas of the first radio bearer corresponding to the primary base station and the secondary base station, respectively, is larger than a first threshold or smaller than a second threshold.

10. The method according to claim 5, wherein the feedback message includes a second indicator and a third indicator, and wherein the second indicator indicates whether the volume of buffered data in a buffer area of the first radio bearer corresponding to the primary base station is larger than a third threshold or smaller than a fourth threshold, and the third indicator indicates whether the volume of buffered data in a buffer area of the first radio bearer corresponding to the secondary base station is larger than a fifth threshold or smaller than a sixth threshold.

11. A method for flow control in a dual connectivity system comprising a primary base station and a secondary base station, the method being implemented by a user terminal and comprising:
receiving (S201) a flow ratio for a first radio bearer from the primary base station; and
determining (S202), based on the flow ratio, data to be transmitted on the first radio bearer through the primary base station and a secondary base station, respectively;
reporting a feedback message to the primary base station based on volumes of buffered data in buffer areas of the first radio bearer corresponding to the primary base station and the secondary base station, respectively.

12. The method according to claim 11, wherein determining, based on the flow ratio, data to be transmitted on the first radio bearer through the primary base station and the secondary base station respectively includes:
determining first data to be transmitted to the primary base station and second data to be transmitted to the secondary base station based on the flow ratio and the total data to be transmitted;
buffering the first data into a buffer area of the first radio bearer corresponding to the primary base station, so as to be transmitted to the primary base station; and
buffering the second data into a buffer area of the first radio bearer corresponding to the secondary base station, so as to be transmitted to the secondary base station.

13. An apparatus (600) for flow control in a dual connectivity system comprising a primary base station and a secondary base station, the apparatus being comprised in the primary base station, and comprising:
an obtaining unit (601) configured to obtain first communication information of the secondary base station and second communication information of the primary base station, wherein the first communication information includes at least one of load information and channel information of the secondary base station, and the second communication information includes at least one of load information and channel information of the primary base station;
a determining unit (602) configured to determine a flow ratio for a first radio bearer based on the first communication information and the second communication information to indicate to a user terminal how to allocate data volumes on the first radio bearer to be transmitted through the primary base station and the secondary base station respectively; and
a transmitting unit (603) configured to transmit the flow ratio to said user terminal.

14. An apparatus (700) for flow control in a dual connectivity system comprising a primary base station and a secondary base station, the apparatus being comprised in a user terminal, and, comprising:
a receiving unit (701) configured to receive a flow ratio for a first radio bearer from the primary base station;
a determining unit (702) configured to determine, based on the flow ratio, data to be transmitted on the first radio bearer through the primary base station and the secondary base station, respectively;
reporting means for providing a feedback message to the primary base station based on volumes of buffered data in buffer areas of the first radio bearer corresponding to the primary base station and the secondary base station, respectively.

## Patentansprüche

1. Verfahren zur Durchflussregelung in einem Dual-Konnektivitätssystem, das eine primäre Basisstation und eine sekundäre Basisstation umfasst, wobei das Verfahren an der primären Basisstation implementiert wird und Folgendes umfasst:
Erhalten (S101) von ersten Kommunikationsinformationen der sekundären Basisstation und zweiten Kommunikationsinformationen der primären Basisstation, wobei die ersten Kommunikationsinformationen mindestens eine von Lastinformationen und Kanalinformationen der sekundären Basisstation einschließen und die zweiten Kommunikationsinformationen mindestens eine von Lastinformationen und Kanalinformationen der primären Basisstation einschließen;
Bestimmen (S102) eines Durchflussverhältnisses für einen ersten Funkträger basierend auf den ersten Kommunikationsinformationen und den zweiten Kommunikationsinformationen, um einem Benutzerendgerät anzugeben, wie Datenvolumina auf dem ersten Funkträger zuzuweisen sind, die durch die primäre Basisstation bzw. die sekundäre Basisstation zu übertragen sind; und
Übertragen (S103) des Durchflussverhältnisses an das Benutzerendgerät.

2. Verfahren nach Anspruch 1, wobei die Lastinformationen der sekundären Basisstation mindestens eines von einer Gesamtlast der sekundären Basisstation auf allen Funkträgern und einer Last der sekundären Basisstation auf dem ersten Funkträger einschließen, die Kanalinformationen der sekundären Basisstation mindestens eines von einer Kanalbedingung der sekundären Basisstation und einem Kanalqualitätsindikator CQI der sekundären Basisstation einschließen, die Lastinformationen der primären Basisstation mindestens eines von einer Gesamtlast der primären Basisstation auf allen Funkträgern und einer Last der primären Basisstation auf dem ersten Funkträger einschließen, und die Kanalinformationen der primären Basisstation mindestens eines von einer Kanalbedingung der primären Basisstation und einem Kanalqualitätsindikator CQI der primären Basisstation einschließen.

3. Verfahren nach Anspruch 1, wobei die Lastinformationen der sekundären Basisstation von der sekundären Basisstation erhalten werden, die Kanalinformationen der sekundären Basisstation von der sekundären Basisstation oder dem Benutzerendgerät erhalten werden, die Lastinformationen der primären Basisstation direkt von der primären Basisstation erhalten werden und die Kanalinformationen der primären Basisstation von dem Benutzerendgerät erhalten werden.

4. Verfahren nach Anspruch 1, wobei sowohl die Lastinformationen und die Kanalinformationen der sekundären Basisstation als auch die Kanalinformationen der primären Basisstation periodisch oder entsprechend einem ausgelösten Ereignis übertragen werden.

5. Verfahren nach einem der Ansprüche 1 bis 4, ferner umfassend:
Empfangen einer Rückmeldungsnachricht, die von dem Benutzerendgerät in Bezug auf den ersten Funkträger gemeldet wird, und
wobei das Durchflussverhältnis für den ersten Funkträger periodisch oder entsprechend einem ausgelösten Ereignis basierend auf den ersten und zweiten Kommunikationsinformationen und/oder basierend auf der Rückmeldungsnachricht bestimmt wird.

6. Verfahren nach Anspruch 5, wobei die Rückmeldungsnachricht über ein Steuerelement der Medienzugriffssteuerung MAC CE übertragen wird, und wobei die Rückmeldungsnachricht periodisch oder entsprechend einem ausgelösten Ereignis gemeldet wird.

7. Verfahren nach Anspruch 5, wobei die Rückmeldungsnachricht Volumina von zwischengespeicherten Daten in Zwischenspeicherbereichen des ersten Funkträgers einschließt, die der primären Basisstation bzw. der sekundären Basisstation entsprechen, und wobei das MAC CE Zwischenspeicherstatusberichte BSR einschließt, die den Volumina von zwischengespeicherten Daten in den Zwischenspeicherbereichen entsprechen, die der primären Basisstation bzw. der sekundären Basisstation entsprechen, und durch einen neuen logischen Kanalidentifizierer LCID identifiziert ist.

8. Verfahren nach Anspruch 5, wobei die Rückmeldungsnachricht ein Verhältnis zwischen den Volumina von zwischengespeicherten Daten in den Zwischenspeicherbereichen des ersten Funkträgers einschließt, die der primären Basisstation bzw. der sekundären Basisstation entsprechen.

9. Verfahren nach Anspruch 5, wobei die Rückmeldungsnachricht einen ersten Indikator einschließt, und wobei der erste Indikator angibt, ob das Verhältnis zwischen den Volumina von zwischengespeicherten Daten in den Zwischenspeicherbereichen des ersten Funkträgers, die der primären Basisstation bzw. der sekundären Basisstation entsprechen, größer als ein erster Schwellenwert oder kleiner als ein zweiter Schwellenwert ist.

10. Verfahren nach Anspruch 5, wobei die Rückmeldungsnachricht einen zweiten Indikator und einen dritten Indikator einschließt, und wobei der zweite Indikator angibt, ob das Volumen der zwischengespeicherten Daten in einem Zwischenspeicherbereich des ersten Funkträgers, der der primären Basisstation entspricht, größer als ein dritter Schwellenwert oder kleiner als ein vierter Schwellenwert ist, und der dritte Indikator angibt, ob das Volumen der zwischengespeicherten Daten in einem Zwischenspeicherbereich des ersten Funkträgers, der der sekundären Basisstation entspricht, größer als ein fünfter Schwellenwert oder kleiner als ein sechster Schwellenwert ist.

11. Verfahren zur Durchflussregelung in einem Dual-Konnektivitätssystem, das eine primäre Basisstation und eine sekundäre Basisstation umfasst, wobei das Verfahren durch ein Benutzerendgerät implementiert wird und Folgendes umfasst:
Empfangen (S201) eines Durchflussverhältnisses für einen ersten Funkträger von der primären Basisstation; und
Bestimmen (S202), basierend auf dem Durchflussverhältnis, von Daten, die auf dem ersten Funkträger durch die primäre Basisstation bzw. eine sekundäre Basisstation zu übertragen sind;
Melden einer Rückmeldungsnachricht an die primäre Basisstation basierend auf Volumina von zwischengespeicherten Daten in Zwischenspeicherbereichen des ersten Funkträgers, die der primären Basisstation bzw. der sekundären Basisstation entsprechen.

12. Verfahren nach Anspruch 11, wobei das Bestimmen, basierend auf dem Durchflussverhältnis, von Daten, die auf dem ersten Funkträger durch die primäre Basisstation bzw. die sekundäre Basisstation zu übertragen sind, Folgendes einschließt:
Bestimmen von ersten Daten, die an die primäre Basisstation zu übertragen sind, und zweiten Daten, die an die sekundäre Basisstation zu übertragen sind, basierend auf dem Durchflussverhältnis und den gesamten zu übertragenden Daten;
Zwischenspeichern der ersten Daten in einem Zwischenspeicherbereich des ersten Funkträgers, der der primären Basisstation entspricht, so dass sie an die primäre Basisstation übertragen werden; und
Zwischenspeichern der zweiten Daten in einem Zwischenspeicherbereich des ersten Funkträgers, der der sekundären Basisstation entspricht, so dass sie an die sekundäre Basisstation übertragen werden.

13. Vorrichtung (600) zur Durchflussregelung in einem Dual-Konnektivitätssystem, das eine primäre Basisstation und eine sekundäre Basisstation umfasst, wobei die Vorrichtung in der primären Basisstation enthalten ist, und umfassend:
eine Erhaltungseinheit (601), die konfiguriert ist, um erste Kommunikationsinformationen der sekundären Basisstation und zweite Kommunikationsinformationen der primären Basisstation zu erhalten, wobei die ersten Kommunikationsinformationen mindestens eine von Lastinformationen und Kanalinformationen der sekundären Basisstation einschließen und die zweiten Kommunikationsinformationen mindestens eine von Lastinformationen und Kanalinformationen der primären Basisstation einschließen;
eine Bestimmungseinheit (602), die konfiguriert ist, um ein Durchflussverhältnis für einen ersten Funkträger basierend auf den ersten Kommunikationsinformationen und den zweiten Kommunikationsinformationen zu bestimmen, um einem Benutzerendgerät anzugeben, wie Datenvolumina auf dem ersten Funkträger zuzuweisen sind, die durch die primäre Basisstation bzw. die sekundäre Basisstation zu übertragen sind; und
eine Übertragungseinheit (603), die konfiguriert ist, um das Durchflussverhältnis an das Benutzerendgerät zu übertragen.

14. Vorrichtung (700) zur Durchflussregelung in einem Dual-Konnektivitätssystem, das eine primäre Basisstation und eine sekundäre Basisstation umfasst, wobei die Vorrichtung in einem Benutzerendgerät enthalten ist, und umfassend:
eine Empfangseinheit (701), die konfiguriert ist, um ein Durchflussverhältnis für einen ersten Funkträger von der primären Basisstation zu empfangen;
eine Bestimmungseinheit (702), die konfiguriert ist, um basierend auf dem Durchflussverhältnis Daten zu bestimmen, die auf dem ersten Funkträger durch die primäre Basisstation bzw. eine sekundäre Basisstation zu übertragen sind;
Meldemittel zum Bereitstellen einer Rückmeldungsnachricht an die primäre Basisstation basierend auf Volumina der zwischengespeicherten Daten in Zwischenspeicherbereichen des ersten Funkträgers, die der primären Basisstation bzw. der sekundären Basisstation entsprechen.

## Revendications

1. Procédé pour un contrôle de flux dans un système à double connectivité comprenant une station de base primaire et une station de base secondaire, le procédé étant mis en œuvre au niveau de la station de base primaire et comprenant :
l'obtention (S101) de premières informations de communication de la station de base secondaire et de secondes informations de communication de la station de base primaire, dans lequel les premières informations de communication incluent au moins des informations parmi des informations de charge et des informations de canal de la station de base secondaire, et les secondes informations de communication incluent au moins des informations parmi des informations de charge et des informations de canal de la station de base primaire ;
la détermination (S102) d'un rapport de flux pour une première porteuse radio sur la base des premières informations de communication et des secondes informations de communication pour indiquer à un terminal utilisateur comment allouer des volumes de données sur la première porteuse radio devant être émise par le biais de la station de base primaire et de la station de base secondaire respectivement ; et
l'émission (S103) du rapport de flux vers ledit terminal utilisateur.

2. Procédé selon la revendication 1, dans lequel les informations de charge de la station de base secondaire incluent au moins l'une parmi une charge totale de la station de base secondaire sur toutes les porteuses radio et une charge de la station de base secondaire sur la première porteuse radio, les informations de canal de la station de base secondaire incluent au moins l'une parmi un état de canal de la station de base secondaire et un indicateur de qualité de canal, CQI, de la station de base secondaire, les informations de charge de la station de base primaire incluent au moins l'une parmi une charge totale de la station de base primaire sur toutes les porteuses radio et une charge de la station de base primaire sur la première porteuse radio, et les informations de canal de la station de base primaire incluent au moins l'une parmi un état de canal de la station de base primaire et un indicateur de qualité de canal, CQI, de la station de base primaire.

3. Procédé selon la revendication 1, dans lequel les informations de charge de la station de base secondaire sont obtenues à partir de la station de base secondaire, les informations de canal de la station de base secondaire sont obtenues à partir de la station de base secondaire ou du terminal utilisateur, les informations de charge de la station de base primaire sont directement obtenues à partir de la station de base primaire, et les informations de canal de la station de base primaire sont obtenues à partir du terminal utilisateur.

4. Procédé selon la revendication 1, dans lequel chacune parmi les informations de charge et les informations de canal de la station de base secondaire et les informations de canal de la station de base primaire sont émises périodiquement ou selon un événement déclenché.

5. Procédé selon l'une quelconque des revendications 1 à 4, comprenant en outre :
la réception d'un message de rétroaction signalé par le terminal utilisateur par rapport à la première porteuse radio, et
dans lequel le rapport de flux pour la première porteuse radio est déterminé, périodiquement ou selon un événement déclenché, sur la base des premières et secondes informations de communication et/ou sur la base du message de rétroaction.

6. Procédé selon la revendication 5, dans lequel le message de rétroaction est émis via un élément de contrôle de contrôle d'accès au support, MAC CE, et dans lequel le message de rétroaction est signalé périodiquement ou selon un événement déclenché.

7. Procédé selon la revendication 5, dans lequel le message de rétroaction inclut des volumes de données mises en tampon dans des zones tampon de la première porteuse radio correspondant à la station de base primaire et à la station de base secondaire, respectivement, et dans lequel le MAC CE inclut des signalements de statut de tampon, BSR, correspondant aux volumes de données mises en tampon dans les zones tampon correspondant à la station de base primaire et à la station de base secondaire, respectivement, et est identifié par un nouvel identifiant de canal logique, LCID.

8. Procédé selon la revendication 5, dans lequel le message de rétroaction inclut un rapport entre des volumes de données mises en tampon dans des zones tampon de la première porteuse radio correspondant à la station de base primaire et à la station de base secondaire, respectivement.

9. Procédé selon la revendication 5, dans lequel le message de rétroaction inclut un premier indicateur, et dans lequel le premier indicateur indique si le rapport entre des volumes de données mises en tampon dans les zones tampon de la première porteuse radio correspondant à la station de base primaire et à la station de base secondaire, respectivement, est supérieur à un premier seuil ou inférieur à un deuxième seuil.

10. Procédé selon la revendication 5, dans lequel le message de rétroaction inclut un deuxième indicateur et un troisième indicateur, et dans lequel le deuxième indicateur indique si le volume de données mises en tampon dans une zone tampon de la première porteuse radio correspondant à la station de base primaire est supérieur à un troisième seuil ou inférieur à un quatrième seuil, et le troisième indicateur indique si le volume de données mises en tampon dans une zone tampon de la première porteuse radio correspondant à la station de base secondaire est supérieur à un cinquième seuil ou inférieur à un sixième seuil.

11. Procédé pour un contrôle de flux dans un système à double connectivité comprenant une station de base primaire et une station de base secondaire, le procédé étant mis en œuvre par un terminal utilisateur et comprenant :
la réception (S201) d'un rapport de flux pour une première porteuse radio à partir de la station de base primaire ; et
la détermination (S202), sur la base du rapport de flux, de données devant être émises sur la première porteuse radio par le biais de la station de base primaire et d'une station de base secondaire, respectivement ;
le signalement d'un message de rétroaction à la station de base primaire sur la base de volumes de données mises en tampon dans des zones tampon de la première porteuse radio correspondant à la station de base primaire et à la station de base secondaire, respectivement.

12. Procédé selon la revendication 11, dans lequel la détermination, sur la base du rapport de flux, de données devant être émises sur la première porteuse radio par le biais de la station de base primaire et d'une station de base secondaire respectivement inclut :
la détermination de premières données devant être émises vers la station de base primaire et de secondes données devant être émises vers la station de base secondaire sur la base du rapport de flux et des données totales devant être émises ;
la mise en tampon des premières données dans une zone tampon de la première porteuse radio correspondant à la station de base primaire, de façon à être émises vers la station de base primaire ; et
la mise en tampon des secondes données dans une zone tampon de la première porteuse radio correspondant à la station de base secondaire, de façon à être émises vers la station de base secondaire.

13. Appareil (600) pour un contrôle de flux dans un système à double connectivité comprenant une station de base primaire et une station de base secondaire, l'appareil étant compris dans la station de base primaire, et comprenant :
une unité d'obtention (601) configurée pour obtenir des premières informations de communication de la station de base secondaire et des secondes informations de communication de la station de base primaire, dans lequel les premières informations de communication incluent au moins des informations parmi des informations de charge et des informations de canal de la station de base secondaire, et les secondes informations de communication incluent au moins des informations parmi des informations de charge et des informations de canal de la station de base primaire ;
une unité de détermination (602) configurée pour déterminer un rapport de flux pour une première porteuse radio sur la base des premières informations de communication et des secondes informations de communication pour indiquer à un terminal utilisateur comment allouer des volumes de données sur la première porteuse radio devant être émise par le biais de la station de base primaire et de la station de base secondaire respectivement ; et
une unité d'émission (603) configurée pour émettre le rapport de flux vers ledit terminal utilisateur.

14. Appareil (700) pour un contrôle de flux dans un système à double connectivité comprenant une station de base primaire et une station de base secondaire, l'appareil étant compris dans un terminal utilisateur, et, comprenant :
une unité de réception (701) configurée pour recevoir un rapport de flux pour une première porteuse radio à partir de la station de base primaire ;
une unité de détermination (702) configurée pour déterminer, sur la base du rapport de flux, des données devant être émises sur la première porteuse radio par le biais de la station de base primaire et d'une station de base secondaire, respectivement ;
des moyens de signalement pour fournir un message de rétroaction à la station de base primaire sur la base de volumes de données mises en tampon dans des zones tampon de la première porteuse radio correspondant à la station de base primaire et à la station de base secondaire, respectivement.
